# EUROPEAN PATENT SPECIFICATION

(11) **EP 3 305 966 B1**
(45) Date of publication and mention of the grant of the patent: **19.02.2020**
(21) Application number: 16802398.4
(22) Date of filing: 15.04.2016
(51) Int. Cl.: D06F 37/30, D06F 33/02, D06F 37/42

(54) **BRAKING CONTROL METHOD FOR VARIABLE-FREQUENCY MOTOR OF WASHING MACHINE AND WASHING MACHINE**
BREMSSTEUERUNGSVERFAHREN FÜR WASCHMASCHINENMOTOR MIT VARIABLER FREQUENZ UND WASCHMASCHINE
PROCÉDÉ DE COMMANDE DE FREINAGE POUR MOTEUR À FRÉQUENCE VARIABLE DE MACHINE À LAVER ET MACHINE À LAVER

(30) Priority: 29.05.2015 CN 201510287862
(43) Date of publication of application: 11.04.2018
(73) Proprietor: Qingdao Haier Drum Washing Machine Co., Ltd., Qingdao, Shandong 266101 (CN)
(72) Inventor: HE, Yunfeng, Qingdao Shandong 266101 (CN); JIANG, Yongqiang, Qingdao Shandong 266101 (CN); PI, Xiaojie, Qingdao Shandong 266101 (CN)
(74) Representative: Ziebig, Marlene
(86) International application number: PCT/CN2016/079412
(87) International publication number: WO 2016/192475

(56) References cited:
- CN-A- 1 389 621
- CN-A- 1 908 285
- CN-A- 101 096 259
- CN-Y- 2 316 327
- JP-A- H08 224 394
- JP-A- 2000 014 977
- JP-A- 2000 014 980
- US-B1- 6 445 879

## Description

### TECHNICAL FIELD

The present disclosure relates to the field of washing control of washing machines, and in particular to a brake control method for a variable-frequency motor of a washing machine, and a washing machine.

### BACKGROUND

At present, washing machines are welcomed by the public due to their advantages of a small size, multiple functions, water conservation and no damage to clothes. However, the washing machines usually don't have a brake function during a dewatering process. That is, after all procedures of the washing machine are completed, a motor rotating speed decreases freely, and braking time of the motor is relatively long due to an inertia. For the sake of safety, some washing machines do not allow to open a door thereof before the motor rotating speed is reduced to a safe one, which results in long time for opening the door after the end of the procedure, and causes inconvenience for users. If the washing machine determines that a door lock is abnormally opened during high-speed dewatering, and the motor cannot decelerate, then a high safety risk is caused thereby.

To solve the above potential problem, a direct brake method is used in the prior art; that is, after all procedures of the washing machine are completed, the motor brakes directly so that the motor rotating speed is quickly reduced to 0 rpm. For a washing machine with a belt, however, direct deceleration after high-speed dewatering of the washing machine can cause a large friction between the belt and a motor pulley to generate a large noise, and also affects the service life of the belt. US6445879B1 relates to an apparatus and a method for braking a washing machine without using a capacity dynamic braking resistor.

The present disclosure is proposed in view of this.

### SUMMARY

A technical problem to be solved by the present disclosure is to overcome the shortcomings in the prior art, and provide a brake control method for a variable-frequency motor of a washing machine, and a washing machine. Whereby after high-speed dewatering of the washing machine, the washing machine can be controlled to decelerate smoothly, thus ensuring the motor brakes in specified time, and also avoiding generating a large noise by friction between the belt and the motor pulley due to very abrupt braking, thereby improving the service life of the belt.

Technical solutions adopted in the present disclosure for solving the technical problem thereof are as follows:
The present disclosure provides a brake control method for a variable-frequency motor of a washing machine, the method includes:
after high-speed dewatering of the washing machine, controlling a motor rotating speed to gradually decrease with decelerations in a smaller to greater sequence, wherein the deceleration is set to be the smallest when the motor operates at the highest rotating speed, and as the motor rotating speed decreases, the deceleration is appropriately increased.

Further, after high-speed dewatering of the washing machine, the method also includes obtaining the motor rotating speed;
preferably, obtaining the motor rotating speed includes detecting a current rotating speed of the motor; or
reading a motor rotating speed for dewatering set before operation of the washing machine.

Further, the number of the decelerations is at least two, and controlling a motor rotating speed to gradually decrease with decelerations in hierarchical increments includes:
B1, determining a preset range where the motor rotating speed obtained is located;
B2, obtaining decelerations corresponding to the preset range; and
B3, controlling the motor rotating speed to decrease with the decelerations in a smaller to greater sequence.

Further, each deceleration corresponds to a rotating speed critical value, and during execution of step B3, the current rotating speed of the motor is detected in real time, and when the current rotating speed of the motor is detected to the rotating speed critical value corresponding to the current deceleration, switching to the next deceleration is performed for further decelerating until the motor rotating speed is 0 rpm.

Further, the specific process of the brake control method includes:
step D1: obtaining the motor rotating speed after high-speed dewatering of the washing machine;
step D2: determining the preset range where the motor rotating speed is located, and executing steps D3 to D7 if the motor rotating speed is higher than v1; executing steps D4 to D7 if the motor rotating speed is between v2 and v1; and executing steps D5 to D7 if the motor rotating speed is lower than v2;
step D3: controlling the motor rotating speed to decrease with the deceleration a1 to the rotating speed critical value v1 corresponding to a1;
step D4: controlling the motor rotating speed to decrease with the deceleration a2 to the rotating speed critical value v2 corresponding to a2;
step D5: controlling the motor rotating speed to decrease with the deceleration a3 to the rotating speed critical value v3 corresponding to a3;
step D6: controlling the motor rotating speed to decrease with the deceleration a4 to the rotating speed critical value v4 corresponding to a4; and
step D7: braking to the rotating speed of 0 rpm;
wherein a1 < a2 < a3 < a4; and
v1>v2>v3>v4.

Further, each deceleration corresponds to a preset time for deceleration, and during execution of step B3, after the motor rotating speed has been on the decrease with the current deceleration for the preset time corresponding to the current deceleration, switching to the next deceleration is performed for further decelerating until the motor rotating speed is 0 rpm.

Further, the specific process of the brake control method includes:
step E1: obtaining the motor rotating speed after high-speed dewatering of the washing machine;
step E2: determining the preset range where the motor rotating speed is located, and executing steps E3 to E7 if the motor rotating speed is higher than v1; executing steps E4 to E7 if the motor rotating speed is between v2 and v1; and executing steps E5 to E7 if the motor rotating speed is lower than v2;
step E3: controlling the motor rotating speed to decrease with the deceleration a1 for the preset time t1 corresponding to a1;
step E4: controlling the motor rotating speed to decrease with the deceleration a2 for the preset time t2 corresponding to a2;
step E5: controlling the motor rotating speed to decrease with the deceleration a3 for the preset time t3 corresponding to a3;
step E6: controlling the motor rotating speed to decrease with the deceleration a4 for the preset time t4 corresponding to a4; and
step E7: braking to the rotating speed of 0 rpm;
wherein a1 < a2 < a3 < a4.

Further, controlling a motor rotating speed to gradually decrease with decelerations in hierarchical increments includes:
C1: obtaining preset decelerations, the number of which is at least two, each preset deceleration corresponding to a preset time; and
C2: controlling the motor rotating speed to decrease with the preset decelerations in a smaller to greater sequence.

During execution of step C2, decelerating is performed with the current preset acceleration, and after operation for the preset time corresponding to the current preset deceleration, switching to the next preset deceleration is performed for further decelerating until the motor rotating speed is 0 rpm.

Further, the specific process of the brake control method includes:
step F1: obtaining the decelerations pre-stored after high-speed dewatering of the washing machine;
step F2: controlling the motor rotating speed to decrease with the deceleration a1 for the preset time t1 corresponding to a1;
step F3: controlling the motor rotating speed to decrease with the deceleration a2 for the preset time t2 corresponding to a2;
step F4: controlling the motor rotating speed to decrease with the deceleration a3 for the preset time t3 corresponding to a3;
step F5: controlling the motor rotating speed to decrease with the deceleration a4 for the preset time t4 corresponding to a4; and
step F6: braking to the rotating speed of 0 rpm;
wherein a1 < a2 < a3 < a4.

The present disclosure provides a washing machine fora brake control method for a variable-frequency motor of a washing machine, the washing machine includes:
a computer controller, a variable-frequency board and a motor, wherein after high-speed dewatering of the washing machine, a CPU on the computer controller transmits a brake command to the variable-frequency board, and after receiving the brake command, a CPU on the variable-frequency board drives the motor to operate.

Further, the computer controller includes:
A storage module for storing one or more items selected from a group consisting of the decelerations, the corresponding relations between the decelerations and the preset ranges, the corresponding relations between the decelerations and the rotating speed critical values, and the corresponding relations between the decelerations and the preset time; and
an obtaining module for obtaining the current rotating speed of the motor; and
a control module for controlling the motor rotating speed to gradually decrease with the decelerations in hierarchical increments, based on the motor rotating speed obtained by the obtaining module and the information stored in the storage module.

The technical solutions provided in specific embodiments of the present disclosure have the following beneficial effects:
After high-speed dewatering of the washing machine, the motor rotating speed is controlled to gradually decrease with the decelerations in the smaller to greater sequence in order to achieve smooth deceleration of the motor. In this way, it not only can ensure the motor brakes in specified time, but also avoids generating a large noise by friction between the belt and the motor pulley due to very abrupt braking, thereby improving the service life of the belt.

### BRIEF DESCRIPTION OF THE DRAWINGS

To more clearly describe the technical solutions in the specific embodiments of the present disclosure, a brief introduction to the drawings for use in the specific embodiments will be given below. Apparently, the drawings described below are only some embodiments of the present disclosure, and those of ordinary skill in the art may also derive other drawings from these drawings without creative effort.
Fig. 1 is a flow diagram of a brake control method for a variable-frequency motor of a washing machine provided by the present disclosure;
Fig. 2 is a flow diagram of another brake control method for a variable-frequency motor of a washing machine provided by the present disclosure;
Fig. 3 is a flow diagram of yet another brake control method for a variable-frequency motor of a washing machine provided by the present disclosure;
Fig. 4 is a flow diagram of still another brake control method for a variable-frequency motor of a washing machine provided by the present disclosure; and
Fig. 5 is a structure diagram of a washing machine for a brake control method for a variable-frequency motor of a washing machine provided by the present disclosure.

### DETAILED DESCRIPTION OF THE EMBODIMENTS

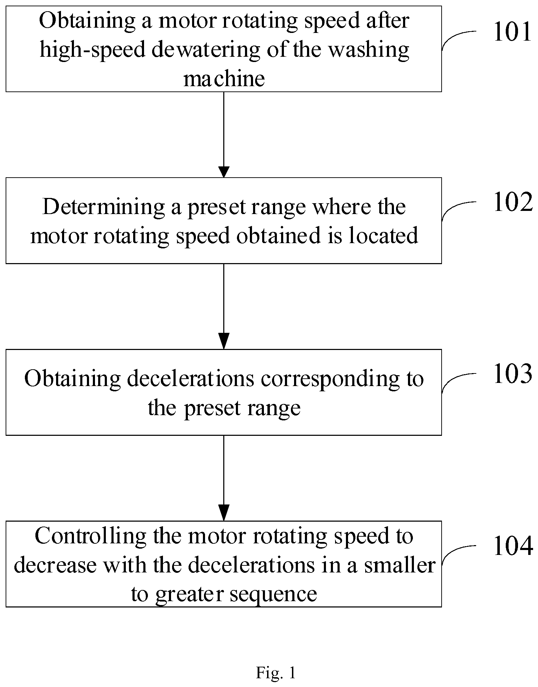

To achieve smooth deceleration of a motor after high-speed dewatering of a washing machine, so as to ensure braking of the motor within specified time while not generating a great noise, the present disclosure provides a brake control method for a variable-frequency motor of a washing machine. As shown in Fig. 1, the method includes:
Step 101: obtaining a motor rotating speed after high-speed dewatering of the washing machine.

Preferably, the motor rotating speed can be obtained by detecting a current rotating speed of the motor of the washing machine. For clothes being washed with different weights, the highest rotating speeds during dewatering in a washing procedure are different, so it detects the current rotating speed of the variable-frequency motor of the washing machine to obtain the motor rotating speed.

Preferably, the motor rotating speed can be obtained by reading a motor rotating speed for dewatering which is set before operation of the washing machine. For a motor rotating speed from a set procedure or set manually by a user, the highest rotating speed during dewatering is stored in the procedure, so the motor rotating speed for dewatering which is set before operation of the washing machine can be directly read to obtain the motor rotating speed.

Step 102: determining a preset range where the motor rotating speed obtained is located.

For motor rotating speeds for dewatering in different procedures, the changes of decelerations during braking are different to ensure smooth deceleration of the motor and thus it needs to determine the preset range where the motor rotating speed is located. For example, there are three preset ranges according to the highest rotating speeds during dewatering of the washing machine, including the rotating speed higher than 1000 rpm, the rotating speed between 800 to 1000 rpm, and the rotating speed lower than 800 rpm.

Step 103: obtaining decelerations corresponding to the preset range.

The number of decelerations corresponding to each preset range is at least two, and corresponding relations between the preset ranges and the decelerations are pre-stored in a storage module of a computer controller of the washing machine. For example, when the preset range is the rotating speed v higher than 1000 rpm, the corresponding decelerations are a1, a2, a3 and a4; when the preset range is the rotating speed v between 800 to 1000 rpm, the corresponding decelerations are a2, a3 and a4; and when the preset range is the rotating speed v lower than 800 rpm, the corresponding decelerations are a3 and a4, wherein a1<a2<a3< a4. The corresponding relations between the preset ranges and the decelerations pre-stored in the storage module of the computer controller of the washing machine are shown in Table 1.

**Table 1**

| Preset range of rotating speed v | Deceleration |
|---|---|
| v > 1000 rpm | a1, a2, a3 and a4 |
| 800 rpm < v < 1000 rpm | a2, a3 and a4 |
| v < 800rpm | a3 and a4 |

Wherein, the setting of each deceleration value should satisfy that the motor rotating speed is reduced to 0 rpm in the shortest time while not generating a large noise.

Preferably, a rotating speed critical value corresponding to each deceleration may also be obtained. The deceleration during braking is continuously changing in order to ensure smooth deceleration of the motor after high-speed dewatering of the washing machine, , and when the motor rotating speed is reduced with a deceleration to a rotating speed critical value, deceleration shiftingis needed so as to achieve rapid deceleration while not generating a large noise. Therefore, the rotating speed critical value corresponding to each deceleration is also stored in the storage module. For example, for the decelerations in Table 1, the deceleration a1 corresponds to the rotating speed critical value of 1000 rpm, the deceleration a2 corresponds to the rotating speed critical value of 800 rpm, the deceleration a3 corresponds to the rotating speed critical value of 400 rpm, and the deceleration a4 corresponds to the rotating speed critical value of 200 rpm. The corresponding relations between the decelerations and the rotating speed critical values stored in the storage module are shown in Table 2.

**Table 2**

| Deceleration | Rotating speed critical value (rpm) |
|---|---|
| a1 | 1000 |
| a2 | 800 |
| a3 | 400 |
| a4 | 200 |

Preferably, preset time corresponding to each deceleration may also be obtained. The deceleration during braking is continuously changing in order to ensure smooth deceleration of the motor after high-speed dewatering of the washing machine, , and when the motor rotating speed is decreased with a deceleration for some time, it needs deceleration shifting so as to achieve rapid deceleration while not generating a large noise. Therefore, the preset time corresponding to each deceleration is also stored in the storage module, and the various preset times may be same or different. For example, for the decelerations in Table 1, the deceleration a1 corresponds to preset time t1, the deceleration a2 corresponds to preset time t2, the deceleration a3 corresponds to preset time t3, and the deceleration a4 corresponds to preset time t4. The corresponding relations between the decelerations and the preset time stored in the storage module are shown in Table 3.

**Table 3**

| Deceleration | Preset time |
|---|---|
| a1 | t1 |
| a2 | t2 |
| a3 | t3 |
| a4 | t4 |

Step 104: controlling the motor rotating speed to decrease with the decelerations in a smaller to greater sequence.

Preferably, the current rotating speed of the motor is detected in real time during gradual decease of the motor rotating speed, and when the current rotating speed of the motor is detected to the rotating speed critical value corresponding to the current deceleration, switching to the next deceleration is performed for further operation, wherein the next deceleration is greater than the current deceleration, and when the motor rotating speed is reduced to 0 rpm, operation of the motor is ended.

Preferably, during gradual decease of the motor rotating speed, after the motor rotating speed has been on the decrease with the current deceleration for the preset time corresponding to the current deceleration, switching to the next deceleration is performed for further operation, wherein the next deceleration is greater than the current deceleration, and when the motor rotating speed is reduced to 0 rpm, operation of the motor is ended.

When the motor operates at the highest rotating speed, a very large deceleration can cause a relatively large noise during braking of the washing machine and increase friction between a belt and a motor pulley, and shorten the service life of the belt. Therefore, the deceleration is set to be smallest when the motor operates at the highest rotating speed; and as the motor rotating speed decreases, the deceleration can be appropriately increased while ensuring a large noise is not generated during braking of the washing machine, so as to quicken braking of the washing machine. Therefore, in this step, the motor rotating speed is controlled to gradually decrease with the decelerations in the smaller to greater sequence until the rotating speed is reduced to 0 rpm. Preferably, the motor may also be turned off when the motor is decelerated to a certain rotating speed, so that washing machine brakes freely.

Preferably, in the present disclosure, steps 101 to 103 may also be omitted, and after high-speed dewatering of the washing machine, the motor rotating speed is directly controlled to gradually decrease with the decelerations in the smaller to greater sequence, according to the decelerations and preset time stored in the storage module.

In the present disclosure, after high-speed dewatering of the washing machine, the motor rotating speed is controlled to gradually decrease with the decelerations in the smaller to greater sequence in order to achieve smooth deceleration of the motor. In this way, it not only can ensure the motor brakes in specified time, but also avoids generating a large noise by friction between the belt and the motor pulley due to very abrupt braking, thereby improving the service life of the belt.

### Embodiment 1

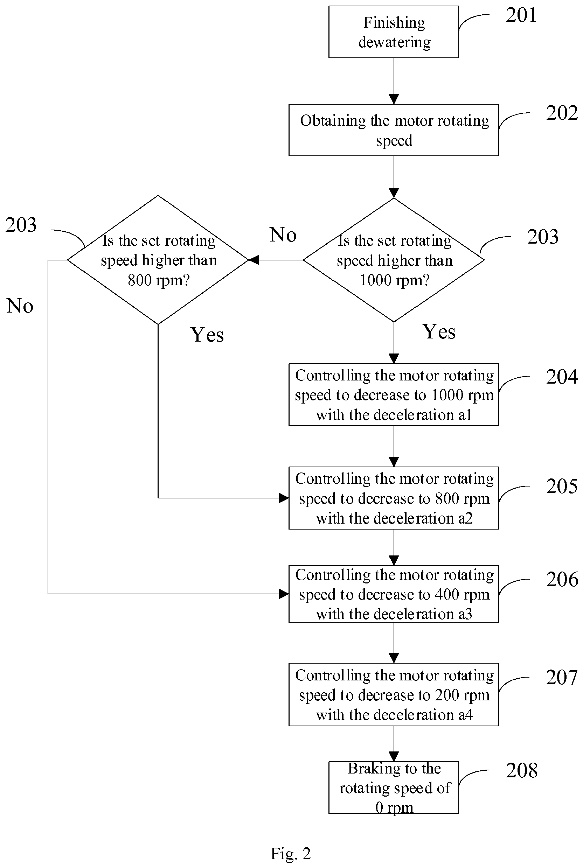

In this embodiment, after high-speed dewatering of the washing machine, the preset range where the motor rotating speed is located is determined, then the decelerations corresponding to the preset range are obtained, and the current rotating speed of the motor is detected in real time, and when it is detected that the current rotating speed of the motor is reduced to the rotating speed critical value corresponding to the current deceleration, switching to the next deceleration is performed for further operation until the motor rotating speed is reduced to 0 rpm. Wherein the corresponding relations between the preset ranges and the decelerations are shown in Table 1, and the corresponding relations between the decelerations and the rotating speed critical values are shown in Table 2. As shown in Fig. 2, a braking process executed by the washing machine includes:
Step 201: finishing dewatering of the washing machine.
Step 202: obtaining the motor rotating speed.

Preferably, the motor rotating speed can be obtained by detecting the current rotating speed of the motor of the washing machine.

Preferably, the motor rotating speed can be obtained by reading the highest rotating speed of the motor set in a procedure of the washing machine.

Step 203: determining the set rotating speed, and executing steps 204 to 208 if the set rotating speed is higher than 1000 rpm; executing steps 205 to 208 if the set rotating speed is between 800 to 1000 rpm; and executing steps 206 to 208 if the set rotating speed is lower than 800 rpm.

Step 204: controlling the motor rotating speed to decrease to 1000 rpm with the deceleration a1.

Step 205: controlling the motor rotating speed to decrease to 800 rpm with the deceleration a2.

Step 206: controlling the motor rotating speed to decrease to 400 rpm with the deceleration a3.

Step 207: controlling the motor rotating speed to decrease to 200 rpm with the deceleration a4.

Step 208: braking to the rotating speed of 0 rpm.

It satisfies a1 < a2 < a3 < a4.

To sum up, in the method provided in this embodiment, after high-speed dewatering of the washing machine, by determining the preset range where the motor rotating speed is located, the motor rotating speed is controlled to decrease with different decelerations. And the decelerations are switched in such a manner that when it is detected that the motor rotating speed is reduced to the preset range corresponding to the current deceleration, switching to the next deceleration is performed for further operation until the motor rotating speed is reduced to 0 rpm, so as to achieve smooth deceleration of the motor. In this way, it not only can ensure the motor brakes in specified time, but also avoids generating a large noise by friction between the belt and the motor pulley due to very abrupt braking, thereby improving the service life of the belt.

### Embodiment 2

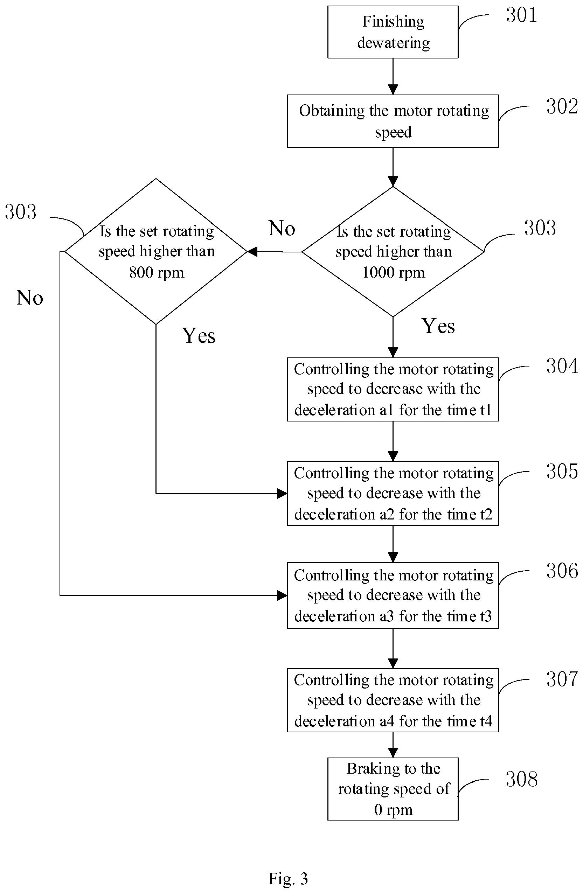

In this embodiment, after high-speed dewatering of the washing machine, the preset range where the motor rotating speed is located is determined, then the decelerations corresponding to the preset range and the preset time corresponding to each deceleration are obtained, and after the motor rotating speed has been on the decrease with the current deceleration for the preset time corresponding to the current deceleration, switching to the next deceleration is performed for further operation until the motor rotating speed is 0 rpm. Wherein the corresponding relations between the preset ranges and the decelerations are shown in Table 1, and the corresponding relations between the decelerations and the preset time are shown in Table 3. As shown in Fig. 3, a braking process executed by the washing machine includes:
Step 301: finishing dewatering of the washing machine.
Step 302: obtaining the motor rotating speed.

Preferably, the motor rotating speed can be obtained by detecting the current rotating speed of the motor of the washing machine.

Preferably, the motor rotating speed can be obtained by reading the highest rotating speed of the motor set in a procedure of the washing machine.

Step 303: determining the set rotating speed, and executing steps 304 to 308 if the set rotating speed is higher than 1000 rpm; executing steps 305 to 308 if the set rotating speed is between 800 to 1000 rpm; and executing steps 306 to 308 if the set rotating speed is lower than 800 rpm.

Step 304: controlling the motor rotating speed to decrease with the deceleration a1 for the time t1.

Step 305: controlling the motor rotating speed to decrease with the deceleration a2 for the time t2.

Step 306: controlling the motor rotating speed to decrease with the deceleration a3 for the time t3.

Step 307: controlling the motor rotating speed to decrease with the deceleration a4 for the time t4.

Step 308: Braking to the rotating speed of 0 rpm.

It satisfies a1 < a2 < a3 < a4.

To sum up, in the method provided in this embodiment, after high-speed dewatering of the washing machine, by determining the preset range where the motor rotating speed is located, the motor rotating speed is controlled to decrease with different decelerations .And the decelerations are switched in such a manner that after the motor rotating speed has been on the decrease with the current deceleration for the preset time corresponding to the current deceleration, switching to the next deceleration is performed for further operation until the motor rotating speed is 0 rpm, so as to achieve smooth deceleration of the motor. In this way, it not only can ensure the motor brakes in specified time, but also avoids generating a large noise by friction between the belt and the motor pulley due to very abrupt braking, thereby improving the service life of the belt.

### Embodiment 3

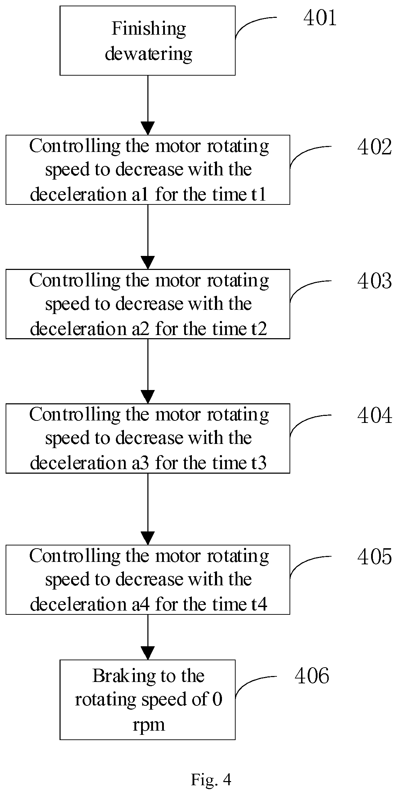

In this embodiment, after high-speed dewatering of the washing machine, the decelerations and the preset time corresponding to the decelerations pre-stored in the storage module are obtained directly, and after the motor rotating speed has been on the decrease with the current deceleration for the preset time corresponding to the current deceleration, switching to the next deceleration is performed for further operation until the motor rotating speed is 0 rpm. The corresponding relations between the decelerations and the preset time are shown in Table 3. As shown in Fig. 4, a braking process executed by the washing machine includes:
Step 401: finishing dewatering of the washing machine.
Step 402: controlling the motor rotating speed to decrease with the deceleration a1 for the time t1.
Step 403: controlling the motor rotating speed to decrease with the deceleration a2 for the time t2.
Step 404: controlling the motor rotating speed to decrease with the deceleration a3 for the time t3.
Step 405: controlling the motor rotating speed to decrease with the deceleration a4 for the time t4.
Step 406: Braking to the rotating speed of 0 rpm.

It satisfies a1 < a2 < a3 < a4.

To sum up, in the method provided in this embodiment, after high-speed dewatering of the washing machine, based on the pre-stored decelerations, the motor rotating speed is gradually reduced with the decelerations in the smaller to greater sequence. And the decelerations are switched in such a manner that by directly determining the preset range where the motor rotating speed is located, the motor rotating speed is controlled to decrease with different decelerations, and switching of which is achieved in such a manner that after the motor rotating speed has been on the decrease with the current deceleration for the preset time corresponding to the current deceleration, switching to the next deceleration is performed for further operation until the motor rotating speed is 0 rpm, so as to achieve smooth deceleration of the motor. In this way, it not only can ensure the motor brakes in specified time, but also avoids generating a large noise by friction between the belt and the motor pulley due to very abrupt braking, thereby improving the service life of the belt.

### Embodiment 4

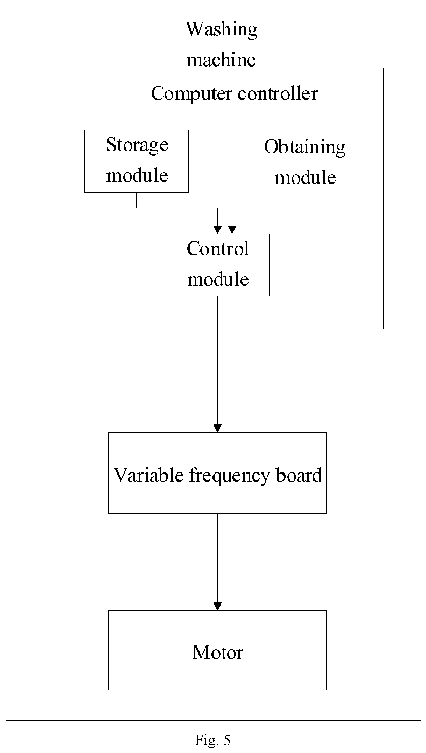

In this embodiment, a washing machine for a brake control method for a variable-frequency motor of a washing machine is provided. As shown in Fig. 5, the washing machine includes a computer controller, a variable-frequency board and a motor. Wherein after high-speed dewatering of the washing machine, a CPU on the computer controller transmits a brake command to the variable-frequency board, and after receiving the brake command, a CPU on the variable-frequency board drives the motor to operate.

The computer controller includes a storage module, an obtaining module and a control module.

The storage module is configured to store one or more items selected from a group consisting of the decelerations, the corresponding relations between the decelerations and the preset ranges, the corresponding relations between the decelerations and the rotating speed critical values, and the corresponding relations between the decelerations and the preset time. For example, the corresponding relations between the decelerations and the preset ranges are as shown in Table 1; the corresponding relations between the decelerations and the rotating speed critical values are as shown in Table 2; and the corresponding relations between the decelerations and the preset time are as shown in Table 3.

The computer controller further includes the obtaining module for obtaining the current rotating speed of the motor.

The control module controls the motor rotating speed to gradually decrease with the decelerations in hierarchical increments, based on the motor rotating speed obtained by the obtaining module and the information stored in the storage module.

In summary, according to the washing machine provided in this embodiment, after high-speed dewatering of the washing machine, the control command can be transmitted to the variable-frequency board. And after receiving the brake command, the CPU on the variable-frequency board controls the motor rotating speed to gradually decrease with the decelerations in hierarchical increments so as to achieve smooth deceleration of the motor. In this way, it not only can ensure the motor brakes in specified time, but also avoids generating a large noise by friction between the belt and the motor pulley due to very abrupt braking, thereby improving the service life of the belt.

Described above are just preferred embodiments of the present disclosure, rather than limitations to the present disclosure in any form. The present disclosure has been disclosed above with the preferred embodiments, which are however not intended to limit the present disclosure. Any technical person familiar with the patent can make some alterations or modifications to form equivalent embodiments with equivalent changes using the technical contents indicated above without departing from the scope of the technical solutions of the present disclosure. All simple alterations, equivalent changes and modifications made to the above embodiments based on the technical essence of the present disclosure without departing from the contents of the technical solutions of the present disclosure should still be encompassed within the scope of the solutions of the present disclosure.

## Claims

1. A brake control method for a variable-frequency motor of a washing machine, **characterized in that** the method comprises:
after a high-speed dewatering of the washing machine, controlling a motor rotating speed to gradually decrease with decelerations in hierarchical increments, in a smaller to greater sequence, wherein the deceleration is set to be the smallest when the motor operates at the highest rotating speed, and as the motor rotating speed decreases, the deceleration is appropriately increased.

2. The brake control method for the variable-frequency motor of the washing machine according to claim 1, further comprising, after the high-speed dewatering of the washing machine, the method further comprises obtaining the motor rotating speed;
preferably, obtaining the motor rotating speed comprises detecting a current rotating speed of the motor; or
reading a motor rotating speed for dewatering which is set before an operation of the washing machine.

3. The brake control method for the variable-frequency motor of the washing machine according to claim 2, wherein the number of the decelerations is at least two, and controlling the motor rotating speed to gradually decrease with decelerations in hierarchical increments comprises:
B1, determining (102) a preset range where the motor rotating speed obtained is located;
B2, obtaining (103) decelerations corresponding to the preset range; and
B3, controlling (104) the motor rotating speed to decrease with the decelerations in a smaller to greater sequence.

4. The brake control method for a variable-frequency motor of a washing machine according to claim 3, wherein each deceleration corresponds to a rotating speed critical value, and during execution of step B3, a current rotating speed of the motor is detected in real time,
and when the current rotating speed of the motor is detected to be reduced to the rotating speed critical value corresponding to the current deceleration, switching to the next deceleration is performed for further decelerating until the motor rotating speed is 0 rpm.

5. The brake control method for the variable-frequency motor of the washing machine according to claim 4, wherein a specific process of the brake control method comprises:
step D1: obtaining (202) the motor rotating speed after the high-speed dewatering of the washing machine;
step D2: determining (203) the preset range where the motor rotating speed is located, and executing steps D3 to D7 if the motor rotating speed is higher than v1; executing steps D4 to D7 if the motor rotating speed is between v2 and v1; and executing steps D5 to D7 if the motor rotating speed is lower than v2;
step D3: controlling (204) the motor rotating speed to decrease with a deceleration a1 to a rotating speed critical value v1 corresponding to a1;
step D4: controlling (205) the motor rotating speed to decrease with a deceleration a2 to a rotating speed critical value v2 corresponding to a2;
step D5: controlling (206) the motor rotating speed to decrease with a deceleration a3 to a rotating speed critical value v3 corresponding to a3;
step D6: controlling (207) the motor rotating speed to decrease with a deceleration a4 to a rotating speed critical value v4 corresponding to a4; and
step D7: braking (208) to the rotating speed of 0 rpm;
wherein a1 < a2 < a3 < a4; and
v1>v2>v3>v4.

6. The brake control method for the variable-frequency motor of the washing machine according to claim 3, wherein each deceleration corresponds to a preset time for deceleration, and
during execution of step B3, after the motor rotating speed is on the decrease with the current deceleration for the preset time corresponding to the current deceleration, switching to the next deceleration is performed for further decelerating until the motor rotating speed is 0 rpm.

7. The brake control method for the variable-frequency motor of the washing machine according to claim 6, wherein a specific process of the brake control method comprises:
step E1: obtaining (302) the motor rotating speed after the high-speed dewatering of the washing machine;
step E2: determining (303) the preset range where the motor rotating speed is located, and executing steps E3 to E7 if the motor rotating speed is higher than v1; executing steps E4 to E7 if the motor rotating speed is between v2 and v1; and executing steps E5 to E7 if the motor rotating speed is lower than v2;
step E3: controlling (304) the motor rotating speed to decrease with the deceleration a1 for a preset time t1 corresponding to a1;
step E4: controlling (305) the motor rotating speed to decrease with the deceleration a2 for a preset time t2 corresponding to a2;
step E5: controlling (306) the motor rotating speed to decrease with the deceleration a3 for a preset time t3 corresponding to a3;
step E6: controlling (307) the motor rotating speed to decrease with the deceleration a4 for a preset time t4 corresponding to a4; and
step E7: braking (308) to the rotating speed of 0 rpm;
wherein a1<a2<a3<a4.

8. The brake control method for the variable-frequency motor of the washing machine according to claim 1, wherein controlling the motor rotating speed to gradually decrease with decelerations in hierarchical increments comprises:
C1: obtaining preset decelerations, the number of which is at least two, each preset deceleration corresponding to a preset time; and
C2, controlling the motor rotating speed to decrease with the preset decelerations in a smaller to greater sequence;
during execution of step C2, decelerating is performed with the current preset acceleration, and after operating for the preset time corresponding to the current preset deceleration, switching to a next preset deceleration is performed for further operation until the motor rotating speed is 0 rpm.

9. The brake control method for the variable-frequency motor of the washing machine according to claim 8, wherein a specific process of the brake control method comprises:
step F1: obtaining the decelerations pre-stored after the high-speed dewatering of the washing machine;
step F2: controlling (402) the motor rotating speed to decrease with a deceleration a1 for a preset time t1 corresponding to a1;
step F3: controlling (403) the motor rotating speed to decrease with a deceleration a2 for a preset time t2 corresponding to a2;
step F4: controlling (404) the motor rotating speed to decrease with a deceleration a3 for a preset time t3 corresponding to a3;
step F5: controlling (405) the motor rotating speed to decrease with a deceleration a4 for a preset time t4 corresponding to a4; and
step F6: braking (406) to the rotating speed of 0 rpm;
wherein a1<a2<a3<a4.

10. A washing machine comprising: a computer controller configured to carry out the brake control method for the variable-frequency motor of a washing machine according to any one of claims 1-9, a variable-frequency board and a motor, after a high-speed dewatering of the washing machine, a CPU on the computer controller transmits a brake command to the variable-frequency board, and after receiving the brake command, a CPU on the variable-frequency board drives the motor to operate.

11. The washing machine according to claim 10, wherein the computer controller comprises:
a storage module for storing one or more items selected from a group consisting of the decelerations, the corresponding relations between the decelerations and the preset ranges, the corresponding relations between the decelerations and the rotating speed critical values ,and the corresponding relations between the decelerations and the preset time;
an obtaining module for obtaining a current rotating speed of the motor; and
a control module for controlling the motor rotating speed to gradually decrease with the decelerations in hierarchical increments, based on the motor rotating speed obtained by the obtaining module and an information stored in the storage module.

## Patentansprüche

1. Bremssteuerungsverfahren für Waschmaschinenmotor mit variabler Frequenz,
**dadurch gekennzeichnet, dass** das Verfahren Folgendes umfasst:
nach einer Hochgeschwindigkeitsentwässerung der Waschmaschine, das Steuern einer Motordrehzahl, mit Verzögerungen in hierarchischen Abstufungen, in einer Reihenfolge von kleiner zu größer, allmählich zu sinken, wobei die Verzögerung derart eingestellt ist, dass sie am kleinsten ist, wenn der Motor mit der höchsten Drehzahl arbeitet, und die Verzögerung mit sinkender Motordrehzahl entsprechend erhöht wird.

2. Bremssteuerungsverfahren für Waschmaschinenmotor mit variabler Frequenz nach Anspruch 1, ferner umfassend, nach der Hochgeschwindigkeitsentwässerung der Waschmaschine, dass das Verfahren ferner das Erhalten der Motordrehzahl umfasst;
vorzugsweise das Erhalten der Motordrehzahl das Detektieren einer aktuellen Drehzahl des Motors; oder
das Auslesen einer Motordrehzahl zur Entwässerung, die vor einem Betrieb der Waschmaschine eingestellt wird.

3. Bremssteuerungsverfahren für Waschmaschinenmotor mit variabler Frequenz nach Anspruch 2, wobei die Anzahl der Verzögerungen mindestens zwei ist, und das Steuern der Motordrehzahl, mit Verzögerungen in hierarchischen Abstufungen allmählich zu sinken, Folgendes umfasst:
B1, Bestimmen (102) eines voreingestellten Bereichs, in dem sich die erhaltene Motordrehzahl befindet;
B2, Erhalten (103) von Verzögerungen, die dem voreingestellten Bereich entsprechen; und
B3, Steuern (104) der Motordrehzahl, mit den Verzögerungen in einer Reihenfolge von kleiner zu größer zu sinken.

4. Bremssteuerungsverfahren für Waschmaschinenmotor mit variabler Frequenz nach Anspruch 3, wobei jede Verzögerung einem kritischen Drehzahlwert entspricht und während der Ausführung von Schritt B3 eine aktuelle Drehzahl des Motors in Echtzeit detektiert wird,
und wenn detektiert wird, dass die aktuelle Drehzahl des Motors auf den kritischen Drehzahlwert reduziert ist, der der aktuellen Verzögerung entspricht, ein Wechsel zu der nächsten Verzögerung durchgeführt wird, um weiter zu verzögern, bis die Motordrehzahl 0/min beträgt.

5. Bremssteuerungsverfahren für Waschmaschinenmotor mit variabler Frequenz nach Anspruch 4, wobei ein spezifischer Prozess des Bremssteuerungsverfahrens Folgendes umfasst:
Schritt D1: Erhalten (202) der Motordrehzahl nach der Hochgeschwindigkeitsentwässerung der Waschmaschine;
Schritt D2: Bestimmen (203) des voreingestellten Bereichs, in dem sich die Motordrehzahl befindet, und Ausführen der Schritte D3 bis D7, wenn die Motordrehzahl größer als v1 ist; Ausführen der Schritte D4 bis D7, wenn die Motordrehzahl zwischen v2 und v1 liegt; und Ausführen der Schritte D5 bis D7, wenn die Motordrehzahl kleiner als v2 ist;
Schritt D3: Steuern (204) der Motordrehzahl, mit einer Verzögerung a1 auf einen kritischen Drehzahlwert v1 zu sinken, der a1 entspricht;
Schritt D4: Steuern (205) der Motordrehzahl, mit einer Verzögerung a2 auf einen kritischen Drehzahlwert v2 zu sinken, der a2 entspricht;
Schritt D5: Steuern (206) der Motordrehzahl, mit einer Verzögerung a3 auf einen kritischen Drehzahlwert v3 zu sinken, der a3 entspricht;
Schritt D6: Steuern (207) der Motordrehzahl, mit einer Verzögerung a4 auf einen kritischen Drehzahlwert v4 zu sinken, der a4 entspricht; und
Schritt D7: Bremsen (208) bis zur Drehzahl von 0/min;
wobei a1 < a2 < a3 < a4; und
v1 > v2 > v3 > v4.

6. Bremssteuerungsverfahren für Waschmaschinenmotor mit variabler Frequenz nach Anspruch 3, wobei jede Verzögerung einer voreingestellten Zeit zur Verzögerung entspricht, und
während der Ausführung von Schritt B3, nachdem die Motordrehzahl für die voreingestellte Zeit, die der aktuellen Verzögerung entspricht, mit der aktuellen Verzögerung sinkt, ein Wechsel zu der nächsten Verzögerung durchgeführt wird, um weiter zu verzögern, bis die Motordrehzahl 0/min beträgt.

7. Bremssteuerungsverfahren für Waschmaschinenmotor mit variabler Frequenz nach Anspruch 6, wobei ein spezifischer Prozess des Bremssteuerungsverfahrens Folgendes umfasst:
Schritt E1: Erhalten (302) der Motordrehzahl nach der Hochgeschwindigkeitsentwässerung der Waschmaschine;
Schritt E2: Bestimmen (303) des voreingestellten Bereichs, in dem sich die Motordrehzahl befindet, und Ausführen der Schritte E3 bis E7, wenn die Motordrehzahl größer als v1 ist; Ausführen der Schritte E4 bis E7, wenn die Motordrehzahl zwischen v2 und v1 liegt; und Ausführen der Schritte E5 bis E7, wenn die Motordrehzahl kleiner als v2 ist;
Schritt E3: Steuern (304) der Motordrehzahl, für eine voreingestellte Zeit t1, die a1 entspricht, mit der Verzögerung a1 zu sinken;
Schritt E4: Steuern (305) der Motordrehzahl, für eine voreingestellte Zeit t2, die a2 entspricht, mit der Verzögerung a2 zu sinken;
Schritt E5: Steuern (306) der Motordrehzahl, für eine voreingestellte Zeit t3, die a3 entspricht, mit der Verzögerung a3 zu sinken;
Schritt E6: Steuern (307) der Motordrehzahl, für eine voreingestellte Zeit t4, die a4 entspricht, mit der Verzögerung a4 zu sinken; und
Schritt E7: Bremsen (308) bis zur Drehzahl von 0/min;
wobei a1 < a2 < a3 < a4.

8. Bremssteuerungsverfahren für Waschmaschinenmotor mit variabler Frequenz nach Anspruch 1, wobei das Steuern der Motordrehzahl, mit Verzögerungen in hierarchischen Abstufungen allmählich zu sinken, Folgendes umfasst:
C1: Erhalten von voreingestellten Verzögerungen, deren Anzahl mindestens zwei ist, wobei jede voreingestellte Verzögerung einer voreingestellten Zeit entspricht; und
C2, Steuern der Motordrehzahl, mit den voreingestellten Verzögerungen in einer Reihenfolge von kleiner zu größer zu sinken;
während der Ausführung von Schritt C2 wird das Verzögern mit der aktuellen voreingestellten Beschleunigung durchgeführt, und nach dem Betrieb für die voreingestellte Zeit, die der aktuellen voreingestellten Verzögerung entspricht, wird für den weiteren Betrieb ein Wechsel zu einer nächsten voreingestellten Verzögerung durchgeführt, bis die Motordrehzahl 0/min beträgt.

9. Bremssteuerungsverfahren für Waschmaschinenmotor mit variabler Frequenz nach Anspruch 8, wobei ein spezifischer Prozess des Bremssteuerungsverfahrens Folgendes umfasst:
Schritt F1: Erhalten der Verzögerungen, die nach der Hochgeschwindigkeitsentwässerung der Waschmaschine vorgespeichert werden;
Schritt F2: Steuern (402) der Motordrehzahl, für eine voreingestellte Zeit t1, die a1 entspricht, mit einer Verzögerung a1 zu sinken;
Schritt F3: Steuern (403) der Motordrehzahl, für eine voreingestellte Zeit t2, die a2 entspricht, mit einer Verzögerung a2 zu sinken;
Schritt F4: Steuern (404) der Motordrehzahl, für eine voreingestellte Zeit t3, die a3 entspricht, mit einer Verzögerung a3 zu sinken;
Schritt F5: Steuern (405) der Motordrehzahl, für eine voreingestellte Zeit t4, die a4 entspricht, mit einer Verzögerung a4 zu sinken; und
Schritt F6: Bremsen (406) bis zur Drehzahl von 0/min;
wobei a1 < a2 < a3 < a4.

10. Waschmaschine, umfassend:
eine Computersteuerung, die dazu ausgestaltet ist, das Bremssteuerungsverfahren für den Waschmaschinenmotor mit variabler Frequenz nach einem der Ansprüche 1 bis 9 auszuführen, eine Platine mit variabler Frequenz und einen Motor, wobei nach einer Hochgeschwindigkeitsentwässerung der Waschmaschine eine CPU auf der Computersteuerung einen Bremsbefehl an die Platine mit variabler Frequenz sendet, und nach dem Empfangen des Bremsbefehls eine CPU auf der Platine mit variabler Frequenz den Motor dazu antreibt, zu arbeiten.

11. Waschmaschine nach Anspruch 10, wobei die Computersteuerung Folgendes umfasst:
ein Speichermodul zur Speicherung einer oder mehrerer Einzelheiten, ausgewählt aus der Gruppe bestehend aus den Verzögerungen, den entsprechenden Beziehungen zwischen den Verzögerungen und den voreingestellten Bereichen, den entsprechenden Beziehungen zwischen den Verzögerungen und den kritischen Drehzahlwerten und den entsprechenden Beziehungen zwischen den Verzögerungen und der voreingestellten Zeit;
ein Erhaltungsmodul zum Erhalten einer aktuellen Drehzahl des Motors; und
ein Steuermodul zum Steuern der Motordrehzahl, mit den Verzögerungen in hierarchischen Abstufungen allmählich zu sinken, basierend auf der Motordrehzahl, die von dem Erhaltungsmodul erhalten wird, und einer Information, die in dem Speichermodul gespeichert ist.

## Revendications

1. Procédé de commande de freinage pour un moteur à fréquence variable d'une machine à laver, **caractérisé en ce que** le procédé comprend :
après un essorage à grande vitesse de la machine à laver, commander la diminution progressive d'une vitesse de rotation de moteur avec des décélérations par incrémentations hiérarchiques par une séquence de la plus petite à la plus grande, la décélération étant définie pour être la plus faible lorsque le moteur tourne à la vitesse la plus élevée, et la décélération étant augmentée de façon appropriée lorsque la vitesse de rotation du moteur diminue.

2. Procédé de commande de freinage pour le moteur à fréquence variable de la machine à laver selon la revendication 1, comprenant en outre, après l'essorage à grande vitesse de la machine à laver, le procédé comprenant en outre l'obtention de la vitesse de rotation du moteur ;
de préférence, l'obtention de la vitesse de rotation du moteur comprenant détecter une vitesse de rotation actuelle du moteur ; ou
lire une vitesse de rotation du moteur pour l'essorage qui est définie avant un fonctionnement de la machine à laver.

3. Procédé de commande de freinage pour le moteur à fréquence variable de la machine à laver selon la revendication 2, le nombre de décélérations étant au moins de deux, et commander la diminution progressive de la vitesse de rotation du moteur avec des décélérations par incrémentations hiérarchiques comprenant :
B1, déterminer (102) une plage prédéfinie dans laquelle se trouve la vitesse de rotation du moteur obtenue ;
B2, obtenir (103) des décélérations correspondant à la plage prédéfinie ; et
B3, commander (104) la diminution de la vitesse de rotation du moteur avec les décélérations par une séquence de la plus petite à la plus grande.

4. Procédé de commande de freinage pour un moteur à fréquence variable d'une machine à laver selon la revendication 3, chaque décélération correspondant à une valeur critique de vitesse de rotation, et une vitesse de rotation actuelle du moteur étant détectée en temps réel pendant l'exécution de l'étape B3,
et le passage à la décélération suivante étant exécuté pour continuer la décélération jusqu'à ce que la vitesse de rotation du moteur soit de 0 tr/min lorsque la vitesse de rotation actuelle du moteur est détectée comme étant réduite à la valeur critique de vitesse de rotation correspondant à la décélération actuelle.

5. Procédé de commande de freinage pour le moteur à fréquence variable de la machine à laver selon la revendication 4, un processus spécifique du procédé de commande de freinage comprenant :
étape D1 : obtenir (202) la vitesse de rotation du moteur après l'essorage à grande vitesse de la machine à laver ;
étape D2 : déterminer (203) la plage prédéfinie dans laquelle se trouve la vitesse de rotation du moteur, et exécuter les étapes D3 à D7 si la vitesse de rotation du moteur est supérieure à v1 ; exécuter les étapes D4 à D7 si la vitesse de rotation du moteur est entre v2 et v1 ; et exécuter les étapes D5 à D7 si la vitesse de rotation du moteur est inférieure à v2 ;
étape D3 : commander (204) la diminution de la vitesse de rotation du moteur avec une décélération a1 jusqu'à une valeur critique de vitesse de rotation v1 correspondant à a1 ;
étape D4 : commander (205) la diminution de la vitesse de rotation du moteur avec une décélération a2 jusqu'à une valeur critique de vitesse de rotation v2 correspondant à a2 ;
étape D5 : commander (206) la diminution de la vitesse de rotation du moteur avec une décélération a3 jusqu'à une valeur critique de vitesse de rotation v3 correspondant à a3 ;
étape D6 : commander (207) la diminution de la vitesse de rotation du moteur avec une décélération a4 jusqu'à une valeur critique de vitesse de rotation v4 correspondant à a4 ; et
étape D7 : freiner (208) jusqu'à la vitesse de rotation de 0 tour/min ;
avec a1 < a2 < a3 < a4 ; et
v1>v2>v3>v4.

6. Procédé de commande de freinage pour un moteur à fréquence variable de la machine à laver selon la revendication 3, chaque décélération correspondant à un temps prédéfini pour la décélération, et
pendant l'exécution de l'étape B3, le passage à la décélération suivante étant exécuté pour poursuivre la décélération jusqu'à ce que la vitesse de rotation du moteur soit de 0 tr/min après que la vitesse de rotation du moteur est en diminution avec la décélération actuelle pour le temps prédéfini correspondant à la décélération actuelle.

7. Procédé de commande de freinage pour le moteur à fréquence variable de la machine à laver selon la revendication 6, un processus spécifique du procédé de commande de freinage comprenant :
étape E1 : obtenir (302) la vitesse de rotation du moteur après l'essorage à grande vitesse de la machine à laver ;
étape E2 : déterminer (303) la plage prédéfinie dans laquelle se trouve la vitesse de rotation du moteur,
et exécuter les étapes E3 à E7 si la vitesse de rotation du moteur est supérieure à v1 ; exécuter les étapes E4 à E7 si la vitesse de rotation du moteur est entre v2 et v1 ; et exécuter les étapes E5 à E7 si la vitesse de rotation du moteur est inférieure à v2 ;
étape E3 : commander (304) la diminution de la vitesse de rotation du moteur avec une décélération a1 pour un temps prédéfini t1 correspondant à a1 ;
étape E4 : commander (305) la diminution de la vitesse de rotation du moteur avec une décélération a2 pour un temps prédéfini t2 correspondant à a2 ;
étape E5 : commander (306) la diminution de la vitesse de rotation du moteur avec une décélération a3 pour un temps prédéfini t3 correspondant à a3 ;
étape E6 : commander (307) la diminution de la vitesse de rotation du moteur avec une décélération a4 pour un temps prédéfini t4 correspondant à a4 ; et
étape E7 : freiner (308) jusqu'à la vitesse de rotation de 0 tour/min ;
avec a1 < a2 < a3 < a4.

8. Procédé de commande de freinage pour le moteur à fréquence variable de la machine à laver selon la revendication 1, commander la diminution progressive de la vitesse de rotation du moteur avec des décélérations par incrémentations hiérarchiques comprenant :
C1: obtenir des décélérations prédéfinies, dont le nombre est au moins de deux, chaque décélération prédéfinie correspondant à un temps prédéfini ; et
C2: commander la diminution de la vitesse de rotation du moteur avec les décélérations prédéfinies par une séquence de la plus petite à la plus grande ;
pendant l'exécution de l'étape C2, une décélération est exécutée avec l'accélération prédéfinie actuelle, et le passage à une décélération prédéfinie suivante est exécuté pour la poursuite du fonctionnement jusqu'à ce que la vitesse de rotation du moteur soit de 0 tr/min, après avoir fonctionné pour le temps prédéfini correspondant à la décélération prédéfinie actuelle.

9. Procédé de commande de freinage pour le moteur à fréquence variable de la machine à laver selon la revendication 8, un processus spécifique du procédé de commande de freinage comprenant :
étape F1 : obtenir les décélérations préenregistrées après l'essorage à grande vitesse de la machine à laver ;
étape F2 : commander (402) la diminution de la vitesse de rotation du moteur avec une décélération a1 pour un temps prédéfini t1 correspondant à a1 ;
étape F3 : commander (403) la diminution de la vitesse de rotation du moteur avec une décélération a2 pour un temps prédéfini t2 correspondant à a2 ;
étape F4 : commander (404) la diminution de la vitesse de rotation du moteur avec une décélération a3 pour un temps prédéfini t3 correspondant à a3 ;
étape F5 : commander (405) la diminution de la vitesse de rotation du moteur avec une décélération a4 pour un temps prédéfini t4 correspondant à a4 ; et
étape F6 : freiner (406) jusqu'à la vitesse de rotation de 0 tour/min ;
avec a1 < a2 < a3 < a4.

10. Machine à laver comprenant :
un contrôleur informatisé conçu pour exécuter le procédé de commande de freinage pour le moteur à fréquence variable d'une machine à laver selon l'une quelconque des revendications 1-9,
une carte à fréquence variable et un moteur, un processeur sur le contrôleur informatisé transmettant une commande de freinage à la carte à fréquence variable après un essorage à grande vitesse de la machine à laver, et un processeur sur la carte à fréquence variable commandant au moteur de fonctionner après la réception de la commande de freinage.

11. Machine à laver selon la revendication 10, le contrôleur informatisé comprenant :
un module d'enregistrement pour enregistrer un ou plusieurs objets sélectionnés parmi le groupe se composant de : les décélérations, les relations correspondantes entre les décélérations et les plages prédéfinie, les relations correspondantes entre les décélérations et les valeurs critiques de vitesse de rotation et les relations correspondantes entre les décélérations et le temps prédéfini ;
un module d'obtention pour obtenir une vitesse de rotation actuelle du moteur ; et
un module de commande pour commander la diminution de la vitesse de rotation du moteur avec les décélérations par incrémentations hiérarchiques, basé sur la vitesse de rotation du moteur obtenue par le module d'obtention et une information enregistrée dans le module d'enregistrement.
